# EUROPÄISCHE PATENTSCHRIFT

(11) **EP 3 930 152 B1**
(45) Veröffentlichungstag und Bekanntmachung des Hinweises auf die Patenterteilung: **27.03.2024**
(21) Anmeldenummer: 21179894.7
(22) Anmeldetag: 16.06.2021
(51) Int. Cl.: H02K 1/276, H02K 15/03

(54) **ROTOR FÜR EINE ELEKTRISCHE MASCHINE**
ROTOR FOR AN ELECTRIC MACHINE
ROTOR POUR UNE MACHINE ÉLECTRIQUE

(30) Priorität: 23.06.2020 DE 102020207781
(43) Veröffentlichungstag der Anmeldung: 29.12.2021
(73) Patentinhaber: Volkswagen Aktiengesellschaft, 38440 Wolfsburg (DE)
(72) Erfinder: Akin, Meriem, 30159 Hannover (DE); Schade, Michael, 34132 Kassel (DE); Dolle, Florian, 34255 Altenritte (DE)

(56) Entgegenhaltungen:
- DE-T2- 60 317 028
- JP-A- 2011 239 607
- US-A1- 2005 206 270

## Beschreibung

Die Erfindung betrifft einen Rotor für eine elektrische Maschine umfassend eine Magnettasche und innerhalb der Magnettasche einen Permanentmagneten, eine erste Polymerzusammensetzung umfassend magnetische Füllstoffpartikel in einem ersten Bereich und eine zweite Polymerzusammensetzung umfassend elektrisch leitfähige Füllstoffpartikel geeigneter Größe, um die Bildung von Wirbelströmen zu vermeiden, in einem zweiten Bereich, sowie ein Verfahren zur Herstellung eines solchen Rotors.

Permanentmagneterregte elektrische Maschinen zeichnen sich durch einen elektrische Wicklungen tragenden Stator und einen relativ zu diesem drehbar gelagerten Rotor aus, welcher eine Mehrzahl von Permanentmagneten trägt, mit deren Magnetfeld die Wicklungen des Stators bei Betrieb der elektrischen Maschine wechselwirken. Problematisch bei der Herstellung ist die Fixierung der Permanentmagnete an dem auch als Blechpaket oder Blechstapel, oder einfach als Rotorblech, bezeichneten Grundkörper des Rotors. Insbesondere muss die Fixierung, die typischerweise in beispielsweise röhrenartigen oder stäbchenförmigen Taschen des Grundkörpers erfolgt, tangential und radial sehr präzise erfolgen, um Unwuchten des Rotors, die insbesondere bei Hochdrehzahl-Maschinen schädlich sind, zu vermeiden. Insbesondere ist nicht nur die Unwucht zum Herstellungszeitpunkt, sondern auch die Unwucht während des Betriebs und bezüglich der gesamten Lebenszeit der elektrischen Maschine von Bedeutung. Andererseits ist eine wirtschaftliche Herstellung der Blechpakete sowie der Permanentmagnete nicht ohne relativ große Fertigungstoleranzen möglich.

Die Magnetfixierung von eingebetteten Magneten erfolgte bisher homogen mit einem und demselben Material beispielsweise mittels Kleben, mechanisch mittels Klemmlaschen, mittels Klebeband, mittels expandierbaren Beschichtungen oder mittels Transfermoulding.

Die Druckschriften JP 2011 239607 A, US 2005/206270 A1, DE 603 17 028 T2 beschreiben Rotoren und Verfahren zu deren Herstellung. JP 2011 239607 A offenbart einen Rotor für eine elektrische Maschine umfassend eine Magnettasche, die einen ersten Bereich und einen zweiten Bereich aufweist; einen Permanentmagnet, der innerhalb der Magnettasche positioniert ist; eine erste Polymerzusammensetzung, die in den ersten Bereich eingebracht ist und magnetische Füllstoffpartikel aufweist; und eine zweite Polymerzusammensetzung 38, die in den zweiten Bereich eingebracht ist.

Die aus dem Stand der Technik bekannten Verfahren zur Herstellung eines Rotors sowie die entsprechenden Rotoren sind allerdings nicht gänzlich zufriedenstellend. Daher besteht weiterhin die Notwendigkeit, neue Verfahren sowie entsprechende Rotoren bereitzustellen, die einen exakt ausgerichteten Permanentmagneten innerhalb einer Rotortasche umfassen und für einen dauerhaften Betrieb geeignete physikalische Eigenschaften aufweisen.

Diese Aufgabe wird gelöst durch einen Rotor für eine elektrische Maschine umfassend ein Rotorblech, wobei das Rotorblech eine Magnetasche umfasst; einen Permanentmagnet, wobei der Permanentmagnet innerhalb der Magnettasche fixiert ist, wobei die Magnettasche einen ersten Bereich und einen zweiten Bereich aufweist und eine erste Polymerzusammensetzung umfasst, die mittels Spritzpressen in den ersten Bereich eingebracht ist, und eine zweite Polymerzusammensetzung umfasst, die mittels Spritzpressen in den zweiten Bereich eingebracht ist; und die erste Polymerzusammensetzung in dem ersten Bereich magnetische Füllstoffpartikel aufweist, und die zweite Polymerzusammensetzung in dem zweiten Bereich elektrisch leitfähige Füllstoffpartikel aufweist, und die erste Polymerzusammensetzung sich von der zweiten Polymerzusammensetzung unterscheidet.

Dem Fachmann ist bekannt elektrisch leitfähige Partikel mit geeigneter Größe zu wählen, um Wirbelströme zu vermeiden.

Um innerhalb der Fixierungstaschen oder Magnettaschen des Rotors eine präzise zentrierte Ausrichtung der Magnete zu erreichen, ist erfindungsgemäß vorgesehen, die Permanentmagnete mittels "Resin Transfer Molding", auch Spritzpressen genannt, zu fixieren. Spritzpressen ermöglicht die exakte Ausrichtung des Permanentmagneten innerhalb der Magnettasche. Die erfindungsgemäße Verwendung von zwei unterschiedlichen Zusammensetzungen, nämlich der ersten Zusammensetzung in dem ersten Bereich und der zweiten Zusammensetzung in dem zweiten Bereich, ermöglicht erfindungsgemäß die selektive Fixierung des Permanentmagneten und ermöglicht darüber hinaus, selektiv mittels einer Variation der Polymerzusammensetzungen die physikalischen Eigenschaften der Magnetfixierung optimal anzupassen.

Erfindungsgemäß erfolgt das Einbringen der Polymerzusammensetzungen mittels Spritzpressen, welches allgemein als "Resin Transfer Molding" bekannt ist. Als Resin Transfer Molding wird ein Verfahren zur Herstellung von Formteilen aus Duroplasten und Elastomeren bezeichnet, wobei die Formmasse mittels Kolben von einer meist beheizten Vorkammer über Verteilerkanäle in das Formnest eingespritzt wird, worin sie unter Wärme und Druck aushärtet. Als Formmassen können Polymermassen, bevorzugt Formaldehydharze und Reaktionsharze, verwendet werden.

Kern des erfindungsgemäßen Rotors als auch des erfindungsgemäßen Verfahrens ist es, dass die Magnetfixierung von eingebetteten Magneten selektiv gestaltet wird. Um die magnetischkritischen Bereiche der Magnetfixierung zu funktionalisieren, wird die Polymerzusammensetzung, beispielsweise ein Epoxidharz, mit magnetischen Partikeln gefüllt. In den thermisch-kritischen Bereichen werden elektrisch leitfähige Partikel geeigneter Größe verwendet, die eine viel bessere Wärmeleitfähigkeit als die herkömmlichen nichtleitenden Partikel haben, um die Wärme aus den Magneten effizienter abzuleiten. Die Bereiche, die mit magnetischen Partikeln gefüllt sind, bieten zusätzlich eine magnetische Haltekraft und können dem Zweck der mechanischen Magnetfixierung dienen.

Alles in allem ermöglicht die Verwendung von zwei unterschiedlichen Zusammensetzungen gemäß dieser Ausführungsform, nämlich der ersten Zusammensetzung in dem ersten Bereich und der zweiten Zusammensetzung in dem zweiten Bereich, wobei die erste Polymerzusammensetzung in dem ersten Bereich magnetische Füllstoffpartikel aufweist und die zweite Polymerzusammensetzung in dem zweiten Bereich elektrisch leitfähige Partikel aufweist, die physikalischen Eigenschaften der Magnetfixierung, insbesondere der Wärmeabfuhr, bei gleichzeitig exakter Magnetpositionierung optimal anzupassen.

Gemäß einer bevorzugten Ausführungsform wird ein Rotor beschrieben, wobei die erste Polymerzusammensetzung frei von elektrisch leitfähigen Füllstoffpartikeln ist. Gemäß einer bevorzugten Ausführungsform wird ein Rotor beschrieben, wobei die zweite Polymerzusammensetzung frei von magnetischen Füllstoffpartikeln ist.

Alles in allem ermöglicht die Verwendung von zwei unterschiedlichen Zusammensetzungen gemäß dieser Ausführungsform, nämlich der ersten Zusammensetzung in dem ersten Bereich und der zweiten Zusammensetzungen dem zweiten Bereich, wobei die erste Polymerzusammensetzung in dem ersten Bereich magnetische Füllstoffpartikel aufweist sowie frei von elektrisch leitfähigen Füllstoffpartikeln ist und die zweite Polymerzusammensetzung elektrisch leitfähige Füllstoffpartikel aufweist und frei von magnetischen Füllstoffpartikeln ist, die physikalischen Eigenschaften der Magnetfixierung, insbesondere der Wärmeabfuhr, bei gleichzeitig exakter Magnetpositionierung optimal anzupassen. Durch die Trennung von Bereichen, die nur elektrisch leitfähige Füllstoffpartikel beziehungsweise nur magnetische Füllstoffpartikel aufweisen, lässt sich die Wärmeableitung und die magnetische Übertragung optimieren.

Gemäß einer bevorzugten Ausführungsform wird ein Rotor beschrieben, wobei die erste Polymerzusammensetzung ein erstes Polymer enthält und die zweite Polymerzusammensetzung ein zweites Polymer enthält.

Insgesamt wird durch die Verwendung einer ersten Polymerzusammensetzung umfassend ein erstes Polymer und die Verwendung einer zweiten Polymerzusammensetzung umfassend ein zweites Polymer verhindert, dass sich die Polymerzusammensetzungen miteinander vermischen.

Bevorzugt wird also ein Rotor beschrieben, wobei sich die Entmischbarkeit, insbesondere, aber nicht beschränkt hierauf, die Dichte und/oder die Viskosität und/oder die Hydrophile und/oder die Hydrophobizität, der ersten Polymerzusammensetzung von der der zweiten Polymerzusammensetzung unterscheidet. Als Unterschied in der Entmischbarkeit wird im Zusammenhang mit der vorliegenden Anmeldung die Eigenschaft verstanden, dass sich die Polymerzusammensetzungen im flüssigen Zustand während des Transfermouldings nicht miteinander vermischen.

Bevorzugt sind dabei also insbesondere Polymere oder die solche Polymere enthaltenden Polymerzusammensetzungen, die sich in ihrer Art, insbesondere in ihren physikalisch-chemischen Eigenschaften, beispielsweise Hydrophile und/oder Hydrophobizität, derart voneinander unterscheiden, dass sich die Polymerzusammensetzungen im flüssigen Zustand während des Transfermouldings nicht miteinander vermischen. So ist gemäß einer weiter bevorzugten Ausführungsform das erste Polymer ein im wesentlichen hydrophiles Polymer, während das zweite Polymer ein im wesentlichen hydrophobes Polymer ist. Insbesondere ermöglicht dies ein Verfahren durchzuführen, bei welchem die erste Polymerzusammensetzung als auch die zweite Polymerzusammensetzung gleichzeitig in die Magnettasche eingespritzt werden, da durch die unterschiedlichen physikalisch-chemischen Eigenschaften eine Vermischung der ersten Zusammensetzung mit der zweiten Zusammensetzung bei Herstellung des Rotors vermieden wird.

Anderseits kann eine Entmischung, beziehungsweise ein Vermeiden eines Vermischens, der Zusammensetzungen auch dadurch erzielt werden, dass sich die Dichte und/oder die Viskosität der ersten Polymerzusammensetzung von der Dichte und/oder Viskosität der zweiten Polymerzusammensetzung unterscheidet. Die Dichte und/oder Viskosität der ersten Polymerzusammensetzung lässt sich zum einen gegenüber der Dichte und/oder Viskosität der zweiten Polymerzusammensetzung durch die Variation des ersten Polymers der ersten Zusammensetzung gegenüber dem zweiten Polymer der zweiten Polymerzusammensetzung verändern. Eine andere Möglichkeit besteht darin, die Konzentration an Füllstoffpartikeln sowie die Art und Menge von Zusatzstoffen zu ändern. Insgesamt wird durch eine merklich unterschiedliche Dichte bzw. Viskosität der ersten Polymerzusammensetzung gegenüber der zweiten Polymerzusammensetzung verhindert, dass sich die Polymerzusammensetzungen miteinander vermischen. Insbesondere ermöglicht dies ein Verfahren durchzuführen, bei welchem die erste Polymerzusammensetzung als auch die zweite Polymerzusammensetzung gleichzeitig in die Magnettasche eingespritzt werden.

Gemäß einem weiteren Aspekt der Erfindung wird ein Angusssystem zur Herstellung eines Rotors gemäß der Erfindung beschrieben, wobei das Angusssystem einen ersten Kanal aufweist, durch welchen die erste Polymerzusammensetzung in den ersten Bereich der Magnettasche eingebracht wird und einen zweiten Kanal aufweist, durch welchen die zweite Polymerzusammensetzung in den zweiten Bereich der Magnettasche eingebracht wird.

Gemäß einer bevorzugten Ausführungsform wird ein Rotor beschrieben, wobei der erste Bereich an einer lateralen Seite der Magnettasche angeordnet ist. Als laterale Seite der Magnettasche wird der Bereich beschrieben, der an die lange Seite eines stabförmig ausgebildeten Magneten anschließt. Hier ist eine magnetische Übertragung gewünscht, weshalb die Verwendung von magnetischen Füllstoffpartikel bevorzugt ist.

Gemäß einer bevorzugten Ausführungsform wird ein Rotor beschrieben, wobei der zweite Bereich an einer Kopfseite der Magnettasche angeordnet ist. Als Kopfseite der Magnettasche wird der Bereich beschrieben, der an die kurze Seite eines stabförmig ausgebildeten Magneten anschließt. Zum Rand des Eisens, also der Kopfseite der Magnettasche und zwischen den Magneten ist das Elektroblech hindernd für den magnetischen Fluss zum Stator. Daher wird auf diesen Positionen so wenig Elektroblech wie möglich eingesetzt. Daher sind hier keine zusätzlichen magnetischen Füllstoffpartikel zu nutzen, wobei die elektrisch leitenden Füller vorteilhaft sind, weil diese wärmeableitend sind.

Gemäß einem weiteren Aspekt der Erfindung wird ein Verfahren zur Herstellung eines Rotors beschrieben, wobei das Verfahren die folgenden Schritte umfasst:
- Bereitstellen eines Rotors für eine elektrische Maschine umfassend ein Rotorblech, wobei das Rotorblech eine Magnetasche umfasst;
- Einbringen eines Permanentmagneten in die Magnettasche (20), dadurch gekennzeichnet, dass das Verfahren ferner die Schritte umfasst:
- Einbringen einer ersten Polymerzusammensetzung mittels Spritzpressen in einen ersten Bereich der Magnettasche;
- Einbringen einer zweiten Polymerzusammensetzung mittels Spritzpressen in einen zweiten Bereich der Magnettasche.

Hierbei weist die erste Polymerzusammensetzung in dem ersten Bereich magnetische Füllstoffpartikel auf, und die zweite Polymerzusammensetzung in dem zweiten Bereich elektrisch leitfähige Füllstoffpartikel auf. Die beiden Zusammensetzungen unterscheiden sich. Im Fertigungsprozess spritzt man im ersten Schritt bevorzugt eine Matrix mit den elektrisch leitenden Partikeln um den Magneten in der Magnettasche. Parallel dazu oder in einem zweiten Schritt spritzt man in den zugehörigen Bereichen die Matrix mit den magnetischen Partikeln.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: einen Rotor für eine elektrische Maschine gemäß einer Ausführungsform; und
- Figur 2: einen Rotor in einer weiteren Ansicht.

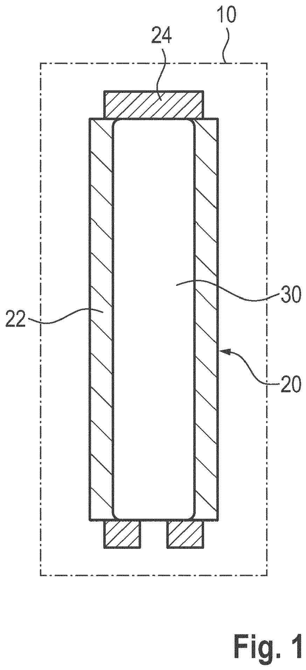

Figur 1 zeigt einen Rotor 1 für eine elektrische Maschine umfassend ein Rotorblech 10, wobei das Rotorblech 10 eine Magnetasche 20 umfasst. Ein Permanentmagnet ist innerhalb der Magnettasche 20 positioniert. Die Magnettasche 20 weist einen ersten Bereich 22 und einen zweiten Bereich 24 auf. Eine erste Polymerzusammensetzung wird mittels Spritzpressen in den ersten Bereich 22 eingebracht. Gleichzeitig oder darauffolgend wird eine zweite Polymerzusammensetzung mittels Spritzpressen in den zweiten Bereich 24 eingebracht. Die erste Polymerzusammensetzung in dem ersten Bereich 22 weist magnetische Füllstoffpartikel auf. Die zweite Polymerzusammensetzung in dem zweiten Bereich 24 weist elektrisch leitfähige Füllstoffpartikel auf.

Kern des erfindungsgemäßen Rotors als auch des erfindungsgemäßen Verfahrens ist es, dass die Magnetfixierung von eingebetteten Magneten selektiv gestaltet wird. Um die magnetischkritischen Bereiche 22 der Magnetfixierung zu funktionalisieren, wird die Polymerzusammensetzung, beispielsweise ein Epoxidharz, mit magnetischen Partikeln gefüllt. In den thermisch-kritischen Bereichen 24 werden elektrisch leitfähige Partikel verwendet, die eine viel bessere Wärmeleitfähigkeit als die herkömmlichen nichtleitenden Partikel haben, um die Wärme aus den Magneten effizienter abzuleiten. Die Bereiche 22, die mit magnetischen Partikeln gefüllt sind, bieten zusätzlich eine magnetische Haltekraft und können dem Zweck der mechanischen Magnetfixierung dienen.

Der erste Bereich 22 ist an einer lateralen Seite der Magnettasche angeordnet. Der zweite Bereich 24 ist an einer Kopfseite der Magnettasche angeordnet. Der zweite Bereich 24 kann unterschiedliche Formen aufweisen, wie aus der Abbildung zu entnehmen ist. Zum Rand des Eisens, also der Kopfseite 24 der Magnettasche 20 und zwischen den Magneten 30 ist das Elektroblech hindernd für den magnetischen Fluss zum Stator. Daher wird auf diesen Positionen so wenig Elektroblech wie möglich eingesetzt. Daher sind hier keine zusätzlichen magnetischen Füllstoffpartikel zu nutzen, wobei die elektrisch leitenden Füllstoffpartikel vorteilhaft sind, weil diese wärmeleitend sind.

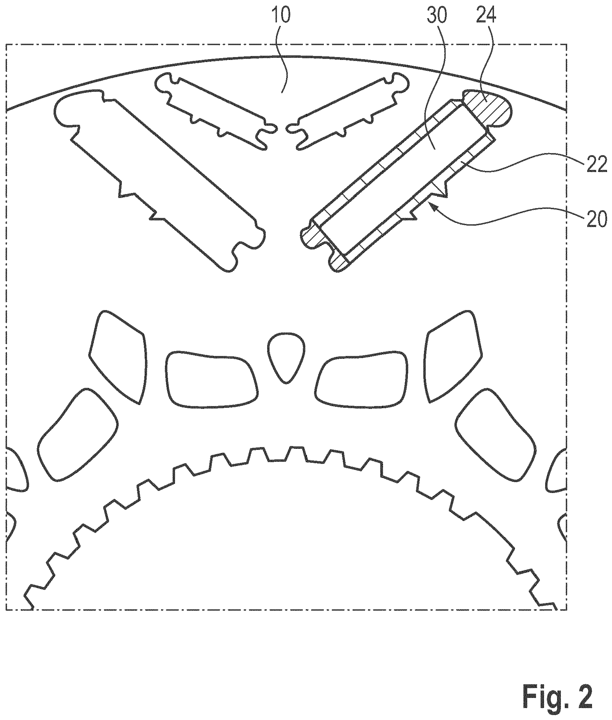

Figur 2 zeigt den Rotor in einer weiteren Ansicht. Es sind nun mehrere Magnettaschen 10 vorhanden. Permanentmagnete 30 sind innerhalb der Magnettaschen 20 fixiert. Jede der Magnettaschen 20 weist einen ersten Bereich 22 und einen zweiten Bereich 24 auf. Eine erste Polymerzusammensetzung wird mittels Spritzpressen in den ersten Bereich 22 eingebracht. Gleichzeitig oder darauffolgend wird eine zweite Polymerzusammensetzung mittels Spritzpressen in den zweiten Bereich 24 eingebracht. Die erste Polymerzusammensetzung in dem ersten Bereich 22 weist magnetische Füllstoffpartikel auf, wie dies bereits für Figur 1 beschrieben wurde. Die zweite Polymerzusammensetzung in dem zweiten Bereich 24 weist elektrisch leitfähige Füllstoffpartikel auf, wie dies bereits für Figur 1 beschrieben wurde.

### Bezugszeichenliste

- 1: Rotor
- 10: Rotorblech
- 20: Magnettasche
- 22: erster Bereich
- 24: zweiter Bereich
- 30: Permanentmagnet

## Patentansprüche

1. Rotor (1) für eine elektrische Maschine umfassend
ein Rotorblech (10), wobei das Rotorblech (10) eine Magnetasche (20) umfasst und die Magnettasche (20) einen ersten Bereich (22) und einen zweiten Bereich (24) aufweist;
einen Permanentmagnet (30), der innerhalb der Magnettasche (20) positioniert ist;
eine erste Polymerzusammensetzung, die mittels Spritzpressen in den ersten Bereich (22) eingebracht ist und magnetische Füllstoffpartikel aufweist; und
eine zweite Polymerzusammensetzung, die mittels Spritzpressen in den zweiten Bereich (24) eingebracht ist und elektrisch leitfähige Füllstoffpartikel aufweist;
wobei die erste Polymerzusammensetzung sich von der zweiten Polymerzusammensetzung unterscheidet.

2. Rotor (1) gemäß Anspruch 1, wobei
die erste Polymerzusammensetzung in dem ersten Bereich (22), die magnetische Füllstoffpartikel aufweist, frei von elektrisch leitfähigen Füllstoffpartikeln ist.

3. Rotor (1) gemäß Anspruch 1 oder 2, wobei
die zweite Polymerzusammensetzung in dem zweiten Bereich (24), die elektrisch leitfähige Füllstoffpartikel aufweist, frei von magnetischen Füllstoffpartikeln ist.

4. Rotor (1) gemäß einem der vorhergehenden Ansprüche, wobei
die erste Polymerzusammensetzung ein erstes Polymer enthält und die zweite Polymerzusammensetzung ein zweites Polymer enthält.

5. Rotor (1) gemäß einem der vorhergehenden Ansprüche, wobei
sich die Entmischbarkeit, insbesondere die Dichte und/oder die Viskosität und/oder die Hydrophile und/oder die Hydrophobizität, der ersten Polymerzusammensetzung von der der zweiten Polymerzusammensetzung unterscheidet.

6. Rotor (1) gemäß einem der vorhergehenden Ansprüche, wobei
der erste Bereich (22) an einer lateralen Seite der Magnettasche angeordnet ist.

7. Rotor (1) gemäß einem der vorhergehenden Ansprüche, wobei
der zweite Bereich (24) an einer Kopfseite der Magnettasche angeordnet ist.

8. Verfahren zur Herstellung eines Rotors gemäß einem der vorhergehenden Ansprüche, umfassend die Schritte:
- Bereitstellen eines Rotors (1) für eine elektrische Maschine, umfassend ein Rotorblech (10), wobei das Rotorblech (10) eine Magnetasche (20) umfasst;
- Einbringen eines Permanentmagneten (30) in die Magnettasche (20);
**dadurch gekennzeichnet, dass** das Verfahren ferner die Schritte umfasst:
- Einbringen einer ersten Polymerzusammensetzung mittels Spritzpressen in einen ersten Bereich (22) der Magnettasche (20), wobei die erste Polymerzusammensetzung magnetische Füllstoffpartikel aufweist;
- Einbringen einer zweiten Polymerzusammensetzung mittels Spritzpressen in einen zweiten Bereich (24) der Magnettasche (20), wobei die zweite Polymerzusammensetzung elektrisch leitfähige Füllstoffpartikel aufweist;
- wobei die erste Polymerzusammensetzung sich von der zweiten Polymerzusammensetzung unterscheidet.

9. Ein Spritzpressung-Angusssystem zur Durchführung des Verfahrens gemäß Anspruch 8, wobei das Angusssystem
einen ersten Kanal aufweist, durch welchen die erste Polymerzusammensetzung, die magnetische Füllstoffpartikel aufweist,
in den ersten Bereich (22) der Magnettasche (20) eingebracht werden kann und einen zweiten Kanal aufweist, durch welchen die zweite Polymerzusammensetzung, die elektrisch leitfähige Füllstoffpartikel aufweist,
in den zweiten Bereich (24) der Magnettasche (20) eingebracht werden kann.

## Claims

1. Rotor (1) for an electrical machine, comprising
a rotor lamination (10), wherein the rotor lamination (10) comprises a magnet pocket (20) and the magnet pocket (20) has a first region (22) and a second region (24);
a permanent magnet (30) which is positioned within the magnet pocket (20);
a first polymer composition which is introduced into the first region (22) via injection moulding and has magnetic filler particles; and
a second polymer composition which is introduced into the second region (24) via injection moulding and has electrically conductive filler particles;
wherein the first polymer composition differs from the second polymer composition.

2. Rotor (1) according to Claim 1, wherein
the first polymer composition in the first region (22), which has magnetic filler particles, is free from electrically conductive filler particles.

3. Rotor (1) according to Claim 1 or 2, wherein
the second polymer composition in the second region (24), which has electrically conductive filler particles, is free from magnetic filler particles.

4. Rotor (1) according to any of the preceding claims, wherein
the first polymer composition contains a first polymer and the second polymer composition contains a second polymer.

5. Rotor (1) according to any of the preceding claims, wherein
the separability, more particularly the density and/or the viscosity and/or the hydrophilicity and/or the hydrophobicity, of the first polymer composition differs from that of the second polymer composition.

6. Rotor (1) according to any of the preceding claims, wherein
the first region (22) is disposed at a lateral side of the magnet pocket.

7. Rotor (1) according to any of the preceding claims, wherein
the second region (24) is disposed at a head side of the magnet pocket.

8. Method for producing a rotor according to any of the preceding claims, comprising the steps of:
- providing a rotor (1) for an electrical machine, comprising a rotor lamination (10), wherein the rotor lamination (10) comprises a magnet pocket (20) ;
- introducing a permanent magnet (30) into the magnet pocket (20);
**characterized in that** the method further comprises the steps of:
- introducing a first polymer composition via injection moulding into a first region (22) of the magnet pocket (20), wherein the first polymer composition has magnetic filler particles;
- introducing a second polymer composition via injection moulding into a second region (24) of the magnet pocket (20), wherein the second polymer composition has electrically conductive filler particles;
- wherein the first polymer composition differs from the second polymer composition.

9. Injection moulding gating system for performing the method according to Claim 8,
wherein the gating system
has a first channel through which the first polymer composition, which has magnetic filler particles, can be introduced into the first region (22) of the magnet pocket (20) and
has a second channel through which the second polymer composition, which has electrically conductive filler particles, can be introduced into the second region (24) of the magnet pocket (20).

## Revendications

1. Rotor (1) pour une machine électrique comprenant
une tôle de rotor (10), la tôle de rotor (10) comprenant une poche magnétique (20) et la poche magnétique (20) comportant une première zone (22) et une seconde zone (24) ;
un aimant permanent (30) qui est positionné à l'intérieur de la poche magnétique (20) ;
une première composition de polymère qui est introduite dans la première zone (22) par moulage par transfert et comporte des particules de charge magnétiques ; et
une seconde composition de polymère qui est introduite dans la seconde zone (24) par moulage par transfert et comporte des particules de charge électroconductrices ;
la première composition de polymère se différenciant de la seconde composition de polymère.

2. Rotor (1) selon la revendication 1, dans lequel la première composition de polymère dans la première zone (22) qui comporte des particules de charge magnétiques est exempte de particules de charge électroconductrices.

3. Rotor (1) selon la revendication 1 ou 2, dans lequel la seconde composition de polymère dans la seconde zone (24) qui comporte des particules de charge électroconductrices est exempte de particules de charge magnétiques.

4. Rotor (1) selon l'une quelconque des revendications précédentes, dans lequel la première composition de polymère contient un premier polymère et la seconde composition de polymère contient un second polymère.

5. Rotor (1) selon l'une quelconque des revendications précédentes, dans lequel la ségrégation, en particulier la densité et/ou la viscosité et/ou l'hydrophilie et/ou l'hydrophobie, de la première composition de polymère diffère de celle de la seconde composition de polymère.

6. Rotor (1) selon l'une quelconque des revendications précédentes, dans lequel la première zone (22) est disposée sur un côté latéral de la poche magnétique.

7. Rotor (1) selon l'une quelconque des revendications précédentes, dans lequel la seconde zone (24) est disposée sur un côté tête de la poche magnétique.

8. Procédé de fabrication d'un rotor selon l'une quelconque des revendications précédentes, comprenant les étapes consistant à :
- préparer un rotor (1) pour une machine électrique, comprenant une tôle de rotor (10), la tôle de rotor (10) comprenant une poche magnétique (20) ;
- introduire un aimant permanent (30) dans la poche magnétique (20) ;
**caractérisé en ce que** le procédé comprend en outre les étapes consistant à :
- introduire une première composition de polymère par moulage par transfert dans une première zone (22) de la poche magnétique (20), la première composition de polymère comportant des particules de charge magnétiques ;
- introduire une seconde composition de polymère par moulage par transfert dans une seconde zone (24) de la poche magnétique (20), la seconde composition de polymère comportant des particules de charge électroconductrices ;
- la première composition de polymère se différenciant de la seconde composition de polymère.

9. Système de moulage par transfert/canal de coulée pour réaliser le procédé selon la revendication 8, le système de canal de coulée comportant un premier canal à travers lequel il est possible d'introduire la première composition de polymère, qui comporte des particules de charge magnétiques, dans la première zone (22) de la poche magnétique (20) et comportant un second canal à travers lequel il est possible d'introduire la seconde composition de polymère, qui comporte des particules de charge électroconductrices, dans la seconde zone (24) de la poche magnétique (20).
